# FASCICULE DE BREVET EUROPEEN

(11) **EP 4 255 746 B1**
(45) Date de publication et mention de la délivrance du brevet: **25.02.2026**
(21) Numéro de dépôt: 21816028.1
(22) Date de dépôt: 22.11.2021
(51) Int. Cl.: B60H 1/00, F25B 5/02, B60H 1/32, F25B 40/00, F25B 40/04, F25B 41/20, F25B 41/42, F25B 43/00, F25B 49/02

(54) **CIRCUIT DE FLUIDE RÉFRIGÉRANT COMPRENANT UNE BRANCHE DE CONTOURNEMENT D'UN ACCUMULATEUR**
KÄLTEMITTELKREISLAUF MIT EINEM SPEICHERBYPASSZWEIG
REFRIGERATING FLUID CIRCUIT COMPRISING AN ACCUMULATOR BYPASS BRANCH

(30) Priorité: 02.12.2020 FR 2012504
(43) Date de publication de la demande: 11.10.2023
(73) Titulaire: VALEO SYSTEMES THERMIQUES, 78320 Le Mesnil Saint-Denis (FR)
(72) Inventeur: YAHIA, Mohamed, 78322 Le Mesnil-Saint-Denis Cedex (FR)
(74) Mandataire: Valeo Powertrain Systems
(86) Numéro de dépôt international: PCT/EP2021/082397
(87) Numéro de publication internationale: WO 2022/117374

(56) Documents cités:
- WO-A1-2019/135049
- DE-A1- 102019 107 196
- JP-A- 2020 104 591
- US-A1- 2007 256 438

## Description

Le domaine de la présente invention est celui des systèmes de traitement thermique exploités pour chauffer ou refroidir une enceinte ou un composant d'un véhicule, notamment un habitacle ou un composant d'une chaîne de traction de ce véhicule. Plus particulièrement la présente invention porte sur un circuit de fluide réfrigérant inclus dans de tels systèmes de traitement thermique.

Les véhicules automobiles sont couramment équipés d'un circuit de fluide réfrigérant et d'un circuit de fluide caloporteur, tous deux utilisés pour participer à un traitement thermique de différentes zones ou différents composants du véhicule. Il est notamment connu d'utiliser le circuit de fluide réfrigérant pour traiter thermiquement un flux d'air envoyé dans l'habitacle du véhicule équipé d'un tel circuit.

Dans une autre application de ce circuit, comme dans le document WO 2019/135049 A1, il est connu d'utiliser le circuit de fluide caloporteur pour refroidir des composants de la chaîne de traction du véhicule, tel que par exemple un dispositif de stockage électrique, ce dernier étant utilisé pour fournir une énergie à un moteur électrique capable de mettre en mouvement le véhicule. Le circuit de fluide réfrigérant participe de manière indirecte à un tel refroidissement en agissant thermiquement sur le circuit de fluide caloporteur par le biais d'au moins un échange thermique entre les deux fluides. Le système de traitement thermique fournit ainsi l'énergie capable de refroidir le dispositif de stockage électrique pendant son utilisation en phases de roulage. Afin de mener à bien le refroidissement du fluide caloporteur, le circuit de fluide réfrigérant comprend notamment un dispositif de compression assurant la compression du fluide réfrigérant à l'état gazeux, ainsi qu'un accumulateur permettant de retenir le fluide réfrigérant à l'était liquide afin que ce dernier ne circule pas à travers le dispositif de compression et n'endommage celui-ci.

Le besoin en refroidissement du fluide caloporteur afin que ce dernier puisse refroidir le dispositif de stockage électrique peut brutalement augmenter lorsque le dispositif de stockage électrique nécessite d'être rechargé de manière très rapide. A ce titre, le système de traitement thermique peut comprendre deux échangeurs de chaleur pour améliorer la capacité de refroidissement du fluide caloporteur par le fluide réfrigérant, l'un des échangeurs de chaleur étant relié à l'accumulateur, l'autre contournant celui-ci afin de maintenir une charge circulante au sein du circuit de fluide réfrigérant.

Afin de limiter les coûts de production, il est néanmoins possible de se limiter à un seul échangeur de chaleur destiné à opérer le refroidissement du dispositif de stockage électrique et assurant l'échange de chaleur entre les deux circuits de fluide. Dans une telle de configuration, et en fonction d'un mode de fonctionnement du circuit de fluide réfrigérant, le fluide réfrigérant en sortie d'un tel échangeur de chaleur ne peut être entièrement dirigé vers l'accumulateur et ne peut entièrement le contourner non plus afin de maintenir la charge circulante tout en préservant une durée de vie des composants du circuit de fluide réfrigérant.

La présente invention permet de pallier cet inconvénient en proposant un circuit de fluide réfrigérant selon la revendication 1.

Grâce à un tel circuit, le fluide réfrigérant, après traitement thermique au sein du troisième échangeur de chaleur, peut être dirigé vers l'accumulateur ou bien contourner celui-ci en fonction d'un mode de fonctionnement du circuit de fluide réfrigérant. Un tel agencement permet de maintenir une charge circulante au sein du fluide de réfrigérant tout en prolongeant le bon fonctionnement des composants du circuit, plus particulièrement le fonctionnement du dispositif de compression.

Le dispositif de compression est chargé de mettre en circulation le fluide réfrigérant au sein du circuit, notamment en compressant le fluide réfrigérant à l'état gazeux à haute pression, ce qui a pour effet d'augmenter également sa température.

Chacun des échangeurs de chaleur disposés au niveau du circuit de fluide réfrigérant participe à un échange thermique impliquant au moins le fluide réfrigérant. Ce dernier, en fonction du mode de fonctionnement du circuit, peut ainsi céder ou capter des calories via ces échanges thermiques.

L'accumulateur est disposé en amont du dispositif de compression par rapport à un sens de circulation du fluide réfrigérant. L'accumulateur peut par exemple se présenter sous la forme d'un réservoir dont la fonction est de conserver toute portion de fluide réfrigérant restée sous forme liquide après circulation dudit fluide réfrigérant au sein du circuit de fluide réfrigérant. L'accumulateur permet ainsi d'éviter que le fluide réfrigérant sous forme liquide circule jusqu'au dispositif de compression, ce dernier n'étant pas apte à agir sur le fluide réfrigérant sous forme liquide.

La première branche et la deuxième branche comprennent chacune au moins un échangeur de chaleur. Le deuxième échangeur de chaleur disposé sur la première branche participe à un échange thermique entraînant un refroidissement du véhicule. Le troisième échangeur de chaleur disposé sur la deuxième branche participe quant à lui de manière indirecte au traitement thermique d'un ou plusieurs composants du véhicule susceptibles de dégager de la chaleur lors de leur fonctionnement, par exemple un dispositif de stockage électrique d'un moteur électrique du véhicule.

Le circuit de fluide réfrigérant comprend un organe de contrôle configuré pour gérer une circulation du fluide réfrigérant de la deuxième branche vers l'accumulateur et/ou vers la branche de contournement. L'organe de contrôle permet de déterminer une répartition de fluide réfrigérant circulant dans la deuxième branche qui est dirigée vers l'accumulateur ou contourne celui-ci. Un tel organe de contrôle est donc paramétrable de sorte à faire varier ladite répartition de fluide réfrigérant, et ce en fonction du mode de fonctionnement du circuit de fluide réfrigérant.

Avantageusement, l'organe de contrôle est disposé sur la deuxième branche, en aval du troisième échangeur de chaleur. D'une manière avantageuse, l'organe de contrôle est disposé sensiblement au niveau du circuit de fluide réfrigérant où le fluide réfrigérant circulant dans la deuxième branche circule vers l'accumulateur et/ou au sein de la branche de contournement.

Avantageusement, le circuit de fluide réfrigérant est configuré pour faire circuler l'intégralité du fluide réfrigérant circulant dans la première branche vers l'accumulateur. En fonction du besoin en refroidissement de l'habitacle du véhicule, la proportion de fluide réfrigérant sous forme liquide en sortie du deuxième échangeur de chaleur peut être conséquente. Avantageusement, le fluide réfrigérant circulant dans la première branche passe donc systématiquement par l'accumulateur afin que le fluide réfrigérant sous forme liquide puisse y être stocké et retenu.

Avantageusement, le premier échangeur de chaleur est configuré pour opérer un échange de chaleur entre le fluide réfrigérant circulant dans la branche principale et un flux d'air extérieur à un habitacle du véhicule. Afin d'être disposé sur une trajectoire du flux d'air extérieur, le premier échangeur de chaleur peut par exemple être agencé au niveau d'une face avant du véhicule. En fonction du mode de fonctionnement du circuit de fluide réfrigérant, le premier échangeur de chaleur permet de refroidir le fluide réfrigérant grâce au flux d'air extérieur. Selon un autre mode de fonctionnement, le premier échangeur de chaleur peut également permettre le refroidissement du flux d'air extérieur par le fluide réfrigérant.

Avantageusement, le deuxième échangeur de chaleur est configuré pour opérer un échange de chaleur entre le fluide réfrigérant circulant dans la première branche et un flux d'air intérieur destiné à être envoyé dans un habitacle du véhicule. C'est le flux d'air intérieur qui refroidit donc directement l'habitacle du véhicule en étant préalablement refroidi par le fluide réfrigérant circulant dans la première branche, et plus particulièrement à travers le deuxième échangeur de chaleur. A ce titre, le deuxième échangeur de chaleur peut par exemple être intégré au sein d'une installation de ventilation, de chauffage et/ou de climatisation, qui assure une circulation du flux d'air intérieur de manière cyclique afin de refroidir ou de chauffer l'habitacle selon son mode de fonctionnement.

Avantageusement, le troisième échangeur de chaleur est configuré pour opérer un échange de chaleur entre le fluide réfrigérant circulant dans la deuxième branche et un circuit de liquide caloporteur. C'est le liquide caloporteur qui va directement refroidir le dispositif de stockage électrique évoqué précédemment. En refroidissant ce dernier, le liquide caloporteur va récupérer des calories. Ces calories sont alors récupérées par le fluide réfrigérant circulant dans la deuxième branche lors de l'échange de chaleur entre le fluide réfrigérant et le liquide caloporteur se produisant au sein du troisième échangeur de chaleur.

Avantageusement, le circuit de fluide réfrigérant comprend un organe de détente disposé en amont du premier échangeur de chaleur. L'organe de détente permet de détendre le fluide réfrigérant avant que ce dernier ne traverse l'échangeur de chaleur. La détente du fluide réfrigérant permet d'abaisser sa pression et sa température afin d'autoriser la capture de calories. L'organe de détente présente la particularité d'assurer la circulation du fluide réfrigérant sans nécessairement détendre celui-ci, et ce en fonction d'un mode de fonctionnement du circuit de fluide réfrigérant.

Selon l'invention, le circuit de fluide réfrigérant comprend un élément de détente disposé en amont du deuxième échangeur de chaleur. L'élément de détente permet d'abaisser la pression et la température du fluide réfrigérant dans le but de refroidir le flux d'air intérieur via le deuxième échangeur de chaleur.

Selon l'invention, le circuit de fluide réfrigérant comprend un dispositif de détente disposé en amont du troisième échangeur de chaleur. Le dispositif de détente permet d'abaisser la pression et la température du fluide réfrigérant dans le but de refroidir le liquide caloporteur circulant dans le circuit de liquide caloporteur, et ce via le troisième échangeur de chaleur.

Avantageusement, le circuit de fluide réfrigérant peut comprendre un quatrième échangeur de chaleur qui comprend une première section disposée sur la première branche en amont de l'élément de détente et une deuxième section disposée sur la branche principale en aval de l'accumulateur et en amont du deuxième point de convergence, le quatrième échangeur de chaleur étant configuré pour opérer un échange de chaleur entre le fluide réfrigérant circulant dans la première branche et le fluide réfrigérant circulant dans la branche principale, la branche de contournement étant configurée pour faire circuler le fluide réfrigérant afin que ce dernier contourne le quatrième échangeur de chaleur et l'accumulateur. Autrement dit, le quatrième échangeur de chaleur est interne au circuit de fluide réfrigérant et garantit un échange de chaleur entre deux fractions de fluide réfrigérant circulant au sein de deux portions différentes du circuit. Le quatrième échangeur de chaleur assure à la fois un pré - refroidissement du fluide réfrigérant circulant dans la première branche, tout en chauffant le fluide réfrigérant dans la branche principale en sortie de l'accumulateur.

Le pré-refroidissement du fluide réfrigérant circulant dans la première branche permet un refroidissement plus efficace de celui-ci via l'élément de détente avant la circulation à travers le deuxième échangeur de chaleur. De plus, augmenter la température du fluide réfrigérant en aval de l'accumulateur permet d'assurer l'évaporation d'une éventuelle phase liquide du fluide réfrigérant pouvant se former en circulant entre l'accumulateur et le dispositif de compression. Le fluide réfrigérant atteint ainsi le dispositif de compression sous forme entièrement gazeux.

Avantageusement, le circuit de fluide réfrigérant peut comprendre un cinquième échangeur de chaleur qui comprend une première section disposée sur la deuxième branche en amont du dispositif de détente, et une deuxième section disposée sur la branche de contournement, le cinquième échangeur de chaleur étant configuré pour opérer un échange de chaleur entre le fluide réfrigérant circulant dans la deuxième branche et le fluide réfrigérant circulant dans la branche de contournement. Selon le même principe que pour le quatrième échangeur de chaleur, le cinquième échangeur de chaleur assure le pré refroidissement du fluide réfrigérant circulant dans la deuxième branche afin de créer une détente plus efficace au niveau du dispositif de détente et donc un meilleur refroidissement avant la traversée du troisième échangeur de chaleur. D'autre part, chauffer le fluide réfrigérant circulant au sein de la branche de contournement permet d'assurer l'évaporation d'une éventuelle phase liquide du fluide réfrigérant pouvant se former au cours de la circulation au sein de la branche de contournement, et ce avant la compression du fluide réfrigérant par le dispositif de compression.

Avantageusement, le circuit de fluide réfrigérant peut comprendre un sixième échangeur de chaleur disposé sur la branche principale, en aval du dispositif de compression et en amont du premier échangeur de chaleur, et configuré pour opérer un échange de chaleur entre le fluide réfrigérant circulant dans la branche principale et un fluide caloporteur. Cet échange de chaleur se déroulant en aval du dispositif de compression, le fluide réfrigérant circule donc à travers le sixième échangeur de chaleur à température élevée. Cet échange de chaleur permet donc de pré refroidir le fluide réfrigérant. Selon un exemple, l'échange de chaleur peut se faire avec le liquide caloporteur circulant dans le circuit de fluide caloporteur. Dans cette situation, l'échange de chaleur permet de préchauffer le liquide caloporteur dans un objectif de chauffage de l'habitacle. Selon un autre exemple, l'échange de chaleur peut se faire avec le flux d'air intérieur afin d'assurer un chauffage de l'habitacle directe. Dans une telle situation le sixième échangeur de chaleur est intégré au sein de l'installation de ventilation, de chauffage et/ou de climatisation tout comme le deuxième échangeur de chaleur.

Avantageusement, le circuit de fluide réfrigérant peut comprendre une troisième branche, qui débute à un troisième point de divergence situé sur la branche principale, en aval du sixième échangeur de chaleur et en amont du premier échangeur de chaleur, et qui se termine à un troisième point de convergence situé sur la branche principale, en aval du premier échangeur de chaleur et en amont du premier point de divergence, la troisième branche comprenant une première vanne configurée pour gérer la circulation du fluide réfrigérant au sein de la troisième branche. Autrement dit, la troisième branche permet au fluide réfrigérant de contourner le premier échangeur de chaleur et l'organe de détente. L'objectif de la troisième branche est de faire circuler le fluide réfrigérant jusqu'au dispositif de détente et au troisième échangeur de chaleur, sans que ledit fluide réfrigérant n'ait été préalablement détendu par l'organe de détente. Le fluide réfrigérant circule donc au sein de la branche principale et de la troisième branche lorsque la première vanne est en position ouverte, et exclusivement au sein de la branche principale lorsque la première vanne est en position fermée.

Avantageusement, le circuit de fluide réfrigérant peut comprendre une quatrième branche, qui débute à un quatrième point de divergence situé sur la branche principale, en aval du premier échangeur de chaleur et en amont du troisième point de convergence, et qui se termine au premier point de convergence, ou sur la branche principale en aval du premier point de convergence et en amont de l'accumulateur, la quatrième branche comprenant une deuxième vanne configurée pour gérer la circulation du fluide réfrigérant au sein de la quatrième branche. La quatrième branche permet au fluide réfrigérant de rejoindre directement l'accumulateur après avoir traversé le premier échangeur, par exemple lors de la mise en œuvre d'un mode de fonctionnement de chauffage de l'habitacle du véhicule. A ce titre le fluide réfrigérant traversant le premier échangeur de chaleur est nécessairement détendu par l'organe de détente. En fonction de sa position, la deuxième vanne permet d'autoriser ou non la circulation du fluide réfrigérant dans la quatrième branche.

D'une manière avantageuse, la première vanne et la deuxième vanne sont ouvertes en même temps pour que le fluide réfrigérant circule à la fois dans la troisième et dans la quatrième branche. Dans cette configuration, le fluide réfrigérant se divise en deux fractions au niveau du troisième point de divergence. Une première fraction est détendue par l'organe de détente, traverse le premier échangeur de chaleur puis circule à travers la quatrième branche pour rejoindre l'accumulateur, tandis qu'une deuxième fraction contourne l'organe de détente et le premier échangeur de chaleur pour alimenter le troisième échangeur de chaleur en étant préalablement détendue par le dispositif de détente.

Avantageusement, l'organe de contrôle peut être une valve à ouverture variable disposée sur la deuxième branche, en aval du deuxième point de divergence et en amont du premier point de convergence, ou sur la branche de contournement, en aval du deuxième point de divergence et en amont du deuxième point de convergence. Le fluide réfrigérant, après avoir traversé le troisième échangeur de chaleur, peut circuler jusqu'à l'accumulateur, ou au sein de la branche de contournement. La valve à ouverture variable permet de gérer la quantité de fluide réfrigérant circulant jusqu'à l'accumulateur. Ainsi, en fonction d'un degré d'ouverture de la valve à ouverture variable, il est possible de mettre en œuvre la répartition du fluide réfrigérant qui circule jusqu'à l'accumulateur ou qui contourne celui-ci. Dans le cas où la valve à ouverture variable est positionnée sur la deuxième branche, plus la valve à ouverture variable présente un degré d'ouverture faible, plus la proportion de fluide réfrigérant circulant au sein de la branche de contournement est élevée. Dans le cas où la valve à ouverture variable est positionnée sur la branche de contournement, plus la valve à ouverture variable présente un degré d'ouverture faible, plus la proportion de fluide réfrigérant circulant au sein de la branche de contournement est faible.

Avantageusement, l'organe de contrôle peut être une valve trois voies disposée sur le deuxième point de divergence. L'intégralité du fluide réfrigérant ayant traversé le troisième échangeur de chaleur passe donc par la valve trois voies. Cette dernière est paramétrée pour gérer la répartition de fluide réfrigérant circulant vers l'accumulateur ou dans la branche de contournement.

L'invention couvre également un procédé de contrôle selon la revendication 9.

Lorsque le circuit de fluide réfrigérant fonctionne selon le mode de refroidissement de l'habitacle du véhicule, le fluide réfrigérant circule notamment au sein de la première branche afin de refroidir l'habitacle du véhicule. Comme cela a été indiqué précédemment, le fluide réfrigérant circulant dans la première branche rejoint intégralement l'accumulateur. Parallèlement à cela, le fluide réfrigérant circule également au sein de la deuxième branche dans un objectif de traitement thermique via la traversée du troisième échangeur de chaleur. Afin de limiter la perte de charge et de trop faire travailler le compresseur via une trop grand proportion de fluide réfrigérant passant par l'accumulateur, le fluide réfrigérant circulant dans la deuxième branche en sortie du troisième échangeur de chaleur est intégralement dirigé dans la branche de contournement par l'organe de contrôle.

Selon une caractéristique avantageuse du procédé, dans le mode de chauffage de l'habitacle du véhicule, le fluide réfrigérant récupère des calories en traversant le troisième échangeur de chaleur. Dans ce mode, le fluide réfrigérant ne circule donc pas au sein de la première branche. La circulation se fait donc exclusivement au sein de la deuxième branche. Le fluide réfrigérant ne pouvant pas contourner l'intégralité de l'accumulateur, le fluide réfrigérant doit donc au moins partiellement circuler dans la deuxième branche jusqu'à l'accumulateur. L'organe de contrôle est alors adapté pour répartir le fluide réfrigérant de manière adéquate au mode de fonctionnement.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
La figure 1 représente un premier mode de réalisation d'un circuit d'un fluide réfrigérant selon l'invention,
La figure 2 représente un deuxième mode de réalisation du circuit de fluide réfrigérant,
La figure 3 représente la circulation du fluide réfrigérant au sein du deuxième mode de réalisation du circuit de fluide réfrigérant selon un mode de refroidissement d'un habitacle du véhicule,
La figure 4 représente la circulation du fluide réfrigérant au sein du deuxième mode de réalisation du circuit de fluide réfrigérant selon un mode de chauffage de l'habitacle du véhicule,
La figure 5 représente le deuxième mode de réalisation du circuit de fluide réfrigérant comprenant un organe de contrôle alternatif.

Les termes amont et aval employés dans la description qui suit se réfèrent au sens de circulation du fluide réfrigérant.

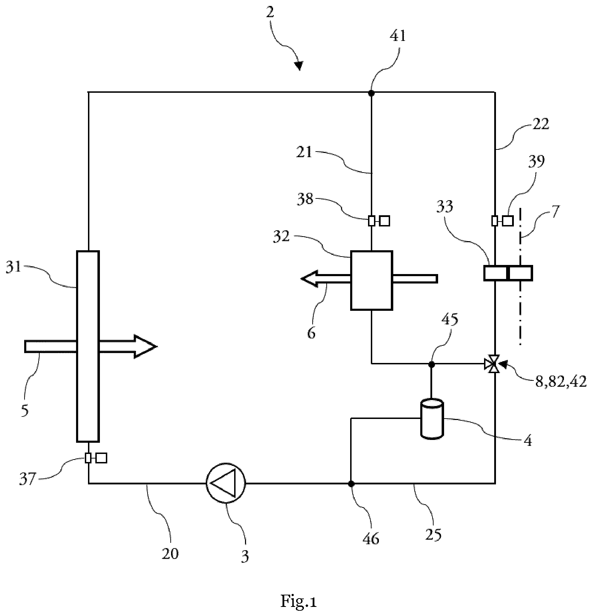

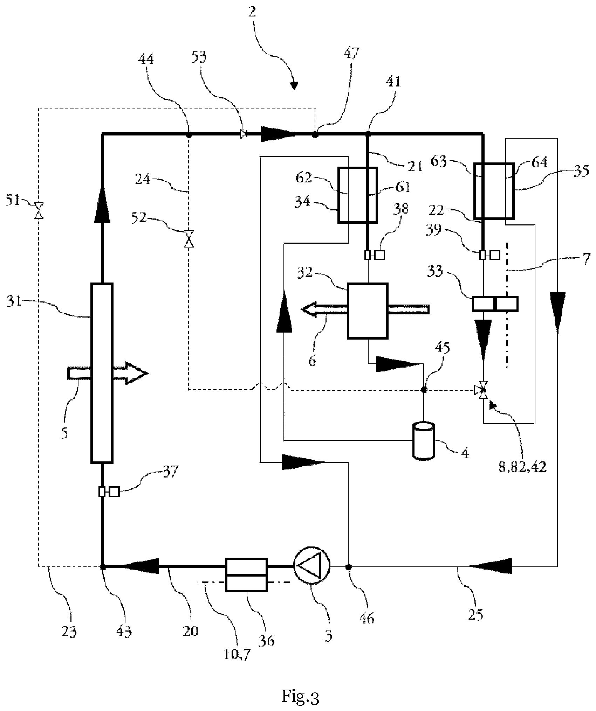

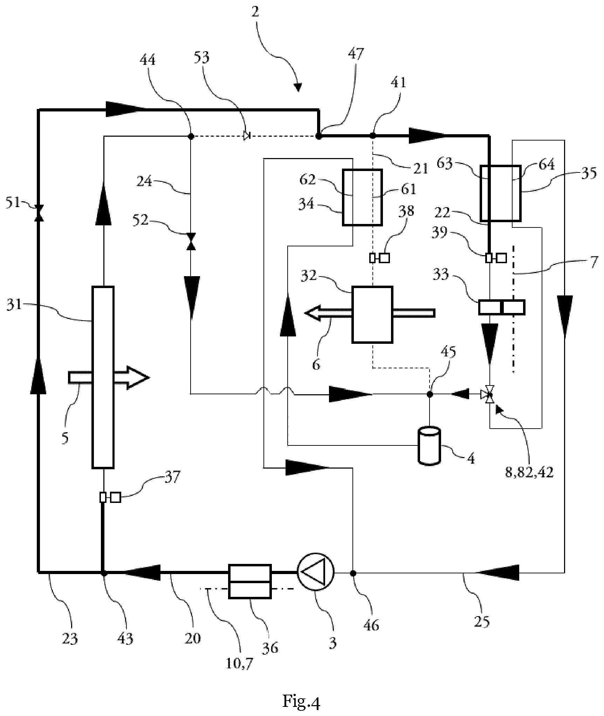

Sur les figures 1, 2 et 5, un circuit de fluide réfrigérant 2 est illustré en traits pleins. Aux figures 3 et **4****,** les portions parcourues par le fluide réfrigérant sont en traits pleins et les portions sans circulation de fluide réfrigérant sont en traits pointillés. Par ailleurs, la circulation du fluide réfrigérant est illustrée en indiquant son sens de circulation par des flèches. Les traits pleins indiquant la circulation de fluide sont également d'épaisseur différente concernant le circuit de fluide réfrigérant 2. Plus précisément, les traits pleins les plus épais correspondent à des portions où le fluide réfrigérant circule à haute pression et les traits pleins les plus fins correspondent à des portions où le fluide réfrigérant circule à basse pression.

Les termes « premier », « première », « deuxième », etc...utilisés dans la description n'ont pas vocation à indiquer un niveau de hiérarchisation ou ordonnancer les éléments qu'ils accompagnent. Ces termes permettent de distinguer les éléments qu'ils accompagnent et peuvent être intervertis sans que soit réduite la portée de l'invention.

La figure 1 représente le circuit de réfrigérant 2 sans indication de circulation de fluide et selon un premier mode de réalisation. Le circuit de fluide réfrigérant 2 est configuré pour faire partie d'un système de traitement thermique, par exemple au sein d'un véhicule. Le fluide réfrigérant peut par exemple être un fluide de type R134a ou R1234yf.

Le circuit de fluide réfrigérant 2 comprend une branche principale 20, qui s'étend d'un premier point de convergence 45 jusqu'à un premier point de divergence 41. Le premier point de divergence 41, ainsi que l'ensemble des points de divergence présentés par la suite, correspondent à des points où une branche se divise en une pluralité de branches. Le premier point de convergence 45, ainsi que l'ensemble des points de convergence présentés par la suite, correspondent à des points où une pluralité de branches se rassemblent en une seule branche.

La branche principale 20 comprend un accumulateur 4, un dispositif de compression 3, un organe de détente 37 et un premier échangeur de chaleur 31, dans cet ordre selon un sens de circulation du fluide réfrigérant. Le dispositif de compression 3 permet la mise en circulation du fluide réfrigérant sous forme gazeux. Ce dernier est mis sous haute pression et haute température avant de circuler en aval du dispositif de compression 3.

Le dispositif de compression 3 n'est apte à compresser que le fluide réfrigérant sous forme gazeux. C'est pour cela que l'accumulateur 4 est disposé en amont du dispositif de compression 3. L'accumulateur 4 permet de retenir toute portion liquide du fluide réfrigérant circulant sur la branche principale 20 entre le premier point de convergence 45 et l'accumulateur 4. Ainsi seul le fluide réfrigérant sous forme gazeux circule de l'accumulateur 4 jusqu'au dispositif de compression 3.

Le premier échangeur de chaleur 31 est quant à lui situé en aval du dispositif de compression 3. L'organe de détente 37 est disposé en amont du premier échangeur de chaleur 31 et en aval du dispositif de compression 3. L'organe de détente 37 permet la détente du fluide réfrigérant après que ce dernier a été mis sous haute pression par le dispositif de compression 3. L'organe de détente 37 présente néanmoins la capacité de laisser passer le fluide réfrigérant sans détendre celui-ci. Ainsi, le fluide réfrigérant peut traverser le premier échangeur de chaleur 31 à haute pression ou à basse pression, la pression du fluide réfrigérant dépendant d'un mode de fonctionnement du circuit de fluide réfrigérant 2.

Le premier échangeur de chaleur 31 est configuré pour opérer un échange de chaleur entre le fluide réfrigérant qui le traverse et un flux d'air extérieur 5 à un habitacle du véhicule. A ce titre, le premier échangeur de chaleur 31 peut par exemple être mis en place au niveau d'une face avant du véhicule afin d'être agencé sur un trajet dudit flux d'air extérieur 5. La fonction du premier échangeur de chaleur 31 dépend du mode de fonctionnement du circuit de fluide réfrigérant 2.

Au niveau du premier point de divergence 41, le circuit de fluide réfrigérant 2 se divise en une première branche 21 et en une deuxième branche 22. Chacune des branches comprend un échangeur de chaleur et un moyen de détente en amont de chacun desdits échangeurs de chaleurs. Ces derniers sont configurés pour répondre à un besoin du système de traitement thermique du véhicule.

La première branche 21 comprend un deuxième échangeur de chaleur 32 et un élément de détente 38 en amont du deuxième échangeur de chaleur 32. Le deuxième échangeur de chaleur 32 est configuré pour opérer un échange de chaleur entre le fluide réfrigérant et un flux d'air intérieur 6 envoyé vers l'habitacle du véhicule. A ce titre, le deuxième échangeur de chaleur 32 peut être agencé au sein d'une installation de ventilation, de chauffage et/ou de climatisation, non représentée. Le deuxième échangeur de chaleur 32 permet ainsi de refroidir le flux d'air intérieur 6 afin que ce dernier soit envoyé dans l'habitacle pour climatiser ce dernier. L'élément de détente 38 permet de détendre le fluide réfrigérant afin que ce dernier traverse le deuxième échangeur de chaleur 32 à basse température dans le but de refroidir le flux d'air intérieur 6. La première branche 21 s'étend jusqu'au premier point de convergence 45. L'intégralité du fluide réfrigérant passant par la première branche 21 circule donc jusqu'à l'accumulateur 4.

La deuxième branche 22 comprend un troisième échangeur de chaleur 33, ainsi qu'un dispositif de détente 39 agencé en amont dudit troisième échangeur de chaleur 33. Le troisième échangeur de chaleur 33 est configuré pour opérer un échange de chaleur entre le fluide réfrigérant et un circuit de liquide caloporteur, partiellement représenté par un trait mixte. Le liquide caloporteur a notamment pour fonction de garantir un traitement thermique, plus particulièrement un refroidissement, d'un ou plusieurs composants électriques du véhicule, par exemple un dispositif de stockage électrique, non représenté. Le fluide réfrigérant circulant à travers le troisième échangeur de chaleur 33 a donc pour fonction de refroidir de manière indirecte le dispositif de stockage électrique en récupérant les calories du liquide caloporteur afin que ce dernier puisse refroidir le dispositif de stockage électrique.

La deuxième branche 22, tout comme la première branche 21, s'étend du premier point de divergence 41 au premier point de convergence 45. La deuxième branche 22 comprend néanmoins un deuxième point de divergence 42, disposé en aval du troisième échangeur de chaleur 33 et en amont du premier point de convergence 45. Sur la figure 1, le deuxième point de divergence 42 comprend un organe de contrôle 8 se présentant sous la forme d'une valve trois voies 82. Cette dernière permet de diriger le fluide réfrigérant vers l'accumulateur 4, ou bien vers une branche de contournement 25.

La branche de contournement 25 permet d'établir une liaison entre la deuxième branche 22 et le dispositif de compression 3 en contournant l'accumulateur 4. Pour ce faire, la branche de contournement 25 s'étend du deuxième point de convergence 42 jusqu'à un deuxième point de convergence 46 situé sur la branche principale 20, en aval de l'accumulateur 4 et en amont du dispositif de compression 3.

L'organe de contrôle 8 peut ainsi être contrôlé à distance afin de gérer la répartition du fluide réfrigérant en sortie du troisième échangeur de chaleur 33 vers l'accumulateur 4 ou au sein de la branche de contournement 25. Cette répartition est dépendante du mode de fonctionnement du circuit de fluide réfrigérant 2, tel que cela sera détaillé par la suite. Le fait de pouvoir répartir le fluide réfrigérant sortant du troisième échangeur de chaleur 33 de façon à rejoindre ou contourner l'accumulateur 4 permet la conservation de la charge circulante du fluide réfrigérant, tout en prolongeant la durée de vie du dispositif de compression 3, qui peut être mis à contribution de manière excessive en cas de perte de charge du fluide réfrigérant.

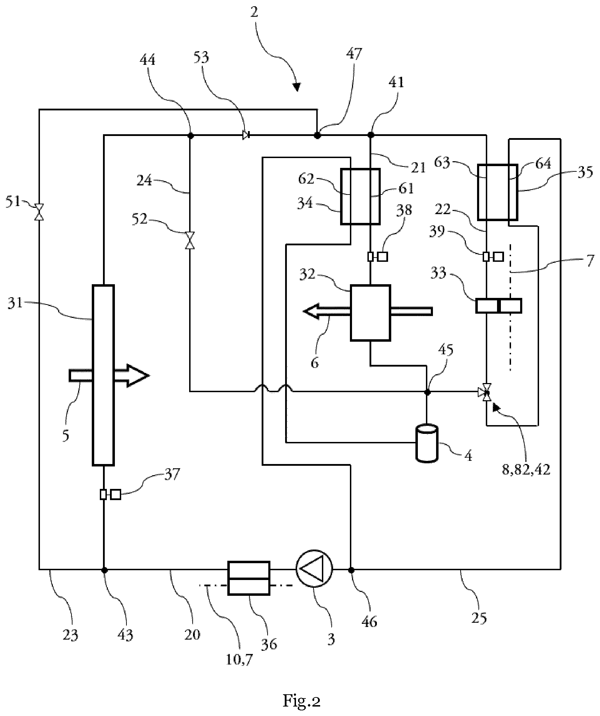

La figure 2 représente un deuxième mode de réalisation du circuit de fluide réfrigérant 2, plus complexe que le premier mode de réalisation représenté en figure 1. On se reportera à la description de la figure 1 pour tout ce qui concerne les similitudes structurelles des deux modes de réalisation.

Sur la figure 2, le circuit de fluide réfrigérant 2 comprend un quatrième échangeur de chaleur 34 et un cinquième échangeur de chaleur 35. Ces deux échangeurs de chaleur sont internes au circuit de fluide réfrigérant. Autrement dit, les deux échangeurs de chaleur sont configurés pour opérer un échange de chaleur entre deux portions du circuit de fluide réfrigérant 2.

Le quatrième échangeur de chaleur 34 comprend une première section 61 située sur la première branche 21, en aval du premier point de divergence 41 et en amont de l'élément de détente 38, et une deuxième section 62 située sur la branche principale 20, en aval de l'accumulateur 4 et en amont du deuxième point de convergence 46. De ce fait la branche de contournement 25 garantit au fluide réfrigérant y circulant de rejoindre le dispositif de compression 3 sans passer par l'accumulateur 4 et sans circuler au sein de la deuxième section 62 du quatrième échangeur de chaleur 34.

Le quatrième échangeur de chaleur 34 permet de pré-refroidir le fluide réfrigérant circulant dans la première branche 21 avant la détente de celui-ci via l'élément de détente 38. Le quatrième échangeur de chaleur 34 permet également de réchauffer le fluide réfrigérant circulant entre l'accumulateur 4 et le dispositif de compression 3, et ainsi d'évaporer une potentielle fraction du fluide réfrigérant s'étant condensé en sortie de l'accumulateur 4.

Le cinquième échangeur de chaleur 35 comprend une première section 63 située sur la deuxième branche 22, en aval du premier point de divergence 41 et en amont du dispositif de détente 39, et une deuxième section 64 située sur la branche de contournement 25, en aval du deuxième point de divergence 42 et en amont du deuxième point de convergence 46.

Le cinquième échangeur de chaleur 35 permet de pré-refroidir le fluide réfrigérant circulant dans la deuxième branche 22 avant la détente de celui-ci via le dispositif de détente 39. Le cinquième échangeur de chaleur 35 permet également de réchauffer le fluide réfrigérant circulant au sein de la branche de contournement 25 afin d'évaporer une potentielle fraction du fluide réfrigérant s'étant condensé après être sorti du troisième échangeur de chaleur 33.

Le circuit de fluide réfrigérant 2 comprend également un sixième échangeur de chaleur 36, installé sur la branche principale 20, en aval du dispositif de compression 3 et en amont de l'organe de détente 37. Le sixième échangeur de chaleur 36 est configuré pour opérer un échange de chaleur entre le fluide réfrigérant et un fluide caloporteur 10. Sur les figures 2 à 4, le fluide caloporteur 10 est le liquide caloporteur circulant au sein du circuit de liquide caloporteur 7. L'échange de chaleur opéré sur le sixième échangeur de chaleur 36 permet simultanément de pré-refroidir le fluide réfrigérant, ce dernier étant à haute température suite à la compression par le dispositif de compression 3, et de chauffer le liquide caloporteur, par exemple dans un objectif de chauffage de l'habitacle du véhicule de manière indirecte.

Le circuit de fluide réfrigérant 2 comprend également une troisième branche 23 débutant à un troisième point de divergence 43 situé sur la branche principale 20, en aval du sixième échangeur de chaleur 36. La troisième branche 23 s'étend jusqu'à un troisième point de convergence 47, situé sur la branche principale 20 en aval du premier échangeur de chaleur 31 et en amont du premier point de divergence 41.

La troisième branche 23 permet ainsi au fluide réfrigérant de circuler du dispositif de compression 3 jusqu'au premier point de divergence 41 sans traverser l'organe de détente 37 et le premier échangeur de chaleur 31. Afin que le fluide réfrigérant circulant dans la troisième branche 23 ne recircule pas vers le premier échangeur de chaleur 31 une fois arrivé au troisième point de convergence 47, la branche principale 20 comprend un clapet anti-retour 53 en aval du premier échangeur de chaleur 31 et en amont du troisième point de convergence 47. Par ailleurs, la troisième branche 23 comprend une première vanne 51 afin d'autoriser ou non la circulation du fluide réfrigérant dans la troisième branche 23.

Le circuit de fluide réfrigérant 2 comprend enfin une quatrième branche 24, qui débute à un quatrième point de divergence 44 situé sur la branche principale 20, en aval du premier échangeur de chaleur 31 et en amont du troisième point de convergence 47, et qui se termine au premier point de convergence 45. La quatrième branche 24 comprend une deuxième vanne 52 afin d'autoriser ou non la circulation du fluide réfrigérant dans la quatrième branche 24.

La figure 3 représente la circulation du fluide réfrigérant selon un mode de refroidissement de l'habitacle du véhicule. Ce mode de refroidissement de l'habitacle du véhicule consiste à assurer simultanément un refroidissement de l'habitacle du véhicule ainsi qu'un refroidissement du dispositif de stockage électrique du véhicule.

Pour ce faire, le fluide réfrigérant est dans un premier temps mis en circulation à haute pression et à haute température par le dispositif de compression 3, puis est pré-refroidi par le liquide caloporteur via le sixième échangeur de chaleur 36.

Le fluide réfrigérant circule par la suite jusqu'à l'organe de détente 37. Ce dernier étant entièrement ouvert, le fluide réfrigérant n'est alors pas détendu et traverse le premier échangeur de chaleur 31. Au sein du premier échangeur de chaleur 31, le fluide réfrigérant est refroidi par le flux d'air extérieur 5.

Le fluide réfrigérant circule ensuite jusqu'au premier point de divergence 41 où il se divise en deux fractions. Une première fraction circule dans la première branche 21 afin de participer au refroidissement de l'habitacle du véhicule, tandis qu'une deuxième fraction circule dans la deuxième branche 22 afin de participer au refroidissement du dispositif de stockage électrique.

La première fraction de fluide réfrigérant est pré-refroidie dans un premier temps en circulant dans la première section 61 du quatrième échangeur de chaleur 34, puis est détendue par l'élément de détente 38 et traverse ensuite le deuxième échangeur de chaleur 32. La détente du fluide réfrigérant permet de diminuer sa pression et sa température. Le fluide réfrigérant traverse donc le deuxième échangeur de chaleur 32 à basse température afin de refroidir le flux d'air intérieur 6 traversant le deuxième échangeur de chaleur 32. Le flux d'air intérieur 6 refroidi est ensuite dirigé vers l'habitacle du véhicule pour climatiser ce dernier.

En sortie du deuxième échangeur de chaleur 32, le fluide réfrigérant poursuit sa circulation au sein de la première branche 21 jusqu'à rejoindre le premier point de convergence 47, puis la branche principale 20 jusqu'à l'accumulateur 4. L'intégralité de la première fraction de fluide réfrigérant rejoint l'accumulateur 4. Ce dernier retient une potentielle portion liquide de la première fraction du fluide réfrigérant, tandis qu'une portion gazeuse continue de circuler au sein de la branche principale 20 jusqu'à la deuxième section 62 du quatrième échangeur de chaleur 34, avant de finalement rejoindre le dispositif de compression 3.

La deuxième fraction de fluide réfrigérant circule quant à elle dans la deuxième branche 22. Cette deuxième fraction est pré-refroidie dans un premier temps en circulant dans la première section 63 du cinquième échangeur de chaleur 35, puis est détendue par le dispositif de détente 39 et traverse ensuite le troisième échangeur de chaleur 33. Tout comme pour l'élément de détente 38, la détente du fluide réfrigérant par le dispositif de détente 39 permet de diminuer sa pression et sa température.

Le fluide réfrigérant traverse le troisième échangeur de chaleur 33 à basse température afin d'opérer un échange de calories avec le liquide caloporteur circulant dans le circuit de liquide caloporteur 7. Le circuit de liquide caloporteur 7 est configuré pour refroidir le dispositif de stockage électrique, ce dernier étant susceptible de dégager de la chaleur pouvant l'endommager. Ainsi le liquide caloporteur est refroidi par le fluide réfrigérant via le troisième échangeur de chaleur. Par la suite, le liquide caloporteur froid refroidit l'élément de stockage électrique, par exemple également par échange de chaleur, et est donc à haute température après un tel refroidissement. Le troisième échangeur de chaleur 33 permet donc de refroidir le liquide caloporteur afin que ce dernier puisse refroidir de manière constante le dispositif de stockage électrique.

Après avoir traversé le troisième échangeur de chaleur 33, le fluide réfrigérant atteint le deuxième point de divergence 42, où la valve trois voies 82 utilisée en tant qu'organe de contrôle 8 est apte à diriger le fluide réfrigérant circulant dans la deuxième branche 22 jusqu'au premier point de convergence 45 et l'accumulateur 4 ou au sein de la branche de contournement 25. Selon ce mode de refroidissement de l'habitacle du véhicule, la valve trois voies 82 redirige l'intégralité du fluide réfrigérant ayant traversé le troisième échangeur de chaleur 33 vers la branche de contournement 25. L'accès vers le premier point de convergence 45 est donc totalement fermé.

En circulant au sein de la branche de contournement 25, le fluide réfrigérant contourne le quatrième échangeur de chaleur 34 et l'accumulateur 4. Le fluide réfrigérant circule toutefois à travers le cinquième échangeur de chaleur 35 ce qui a pour effet d'augmenter la température du fluide réfrigérant dans la branche de contournement 25 afin de s'assurer qu'aucun phénomène de condensation n'est survenu au cours de la circulation du fluide réfrigérant au sein de la branche de contournement 25. Le fluide réfrigérant rejoint par la suite la branche principale 20 et le dispositif de compression 3, via le deuxième point de convergence 46.

Dans ce mode de refroidissement de l'habitacle du véhicule, la première vanne 51 et la deuxième vanne 52 sont en position fermée afin que le fluide réfrigérant ne circule pas au sein de la troisième branche 23 et de la quatrième branche 24.

La figure 4 représente le deuxième mode de réalisation du circuit de fluide réfrigérant 2, et plus particulièrement la circulation du fluide réfrigérant selon un mode de chauffage de l'habitacle du véhicule. L'objectif d'un tel mode est de chauffer l'habitacle du véhicule tout en assurant le refroidissement du dispositif de stockage électrique.

La circulation du fluide réfrigérant est de nouveau initiée par le dispositif de compression 3. Le fluide réfrigérant, alors à haute température, échange ses calories avec le liquide caloporteur au sein du sixième échangeur de chaleur 36. C'est le liquide caloporteur qui, une fois chauffé par le biais de l'échange de chaleur opéré par le sixième échangeur de chaleur 36, participe au chauffage de l'habitacle du véhicule, par exemple par échange de chaleur avec le flux d'air intérieur 6.

Après avoir traversé le sixième échangeur de chaleur 36, le fluide réfrigérant atteint le troisième point de divergence 43. La première vanne 51 étant ouverte, le fluide réfrigérant peut circuler au sein de la troisième branche 23. Le fluide réfrigérant se sépare donc en deux fractions. Une première fraction poursuit sa circulation au sein de la branche principale 20 et est détendue par l'organe de détente 37 avant de traverser le premier échangeur de chaleur 31. La détente du fluide réfrigérant permet notamment de refroidir le flux d'air extérieur 5 afin que ce dernier puisse par exemple récupérer des calories en traversant un échangeur de chaleur tiers situé en aval du premier échangeur de chaleur 31 par rapport au sens de circulation du flux d'air extérieur 5.

La première fraction de fluide réfrigérant, après avoir traversé le premier échangeur de chaleur 31 atteint le quatrième point de divergence 44 et circule au sein de la quatrième branche 24, la deuxième vanne 52 étant ouverte. Cette quatrième branche 24 permet au fluide réfrigérant en sortie du premier échangeur de chaleur 31 de rejoindre directement le premier point de convergence 45 et l'accumulateur 4 sans passer par la première branche 21 ou par la deuxième branche 22. L'objectif ici est donc de chauffer le liquide caloporteur via le sixième échangeur de chaleur 36, et éventuellement de refroidir le flux d'air extérieur 5.

En sortie de l'accumulateur 4, le fluide réfrigérant circule jusqu'au dispositif de compression 3 de manière identique au fluide réfrigérant circulant dans la première branche 21 selon le mode de refroidissement de l'habitacle du véhicule, c'est-à-dire en circulant dans la branche principale 20 et plus particulièrement en passant par la deuxième section 62 du quatrième échangeur de chaleur 34, ledit passage étant sans effet étant donné que le fluide réfrigérant ne circule pas dans la première branche 21.

Concernant la deuxième fraction de fluide réfrigérant, celle-ci circule au sein de la troisième branche 23 dans le but de contourner le premier échangeur de chaleur 31 jusqu'au troisième point de convergence 47. Le clapet anti-retour 53 permet à la deuxième fraction de fluide réfrigérant de ne pas circuler vers le premier échangeur de chaleur 31 une fois arrivée au troisième point de convergence 47. Le fluide réfrigérant circule par la suite uniquement dans la deuxième branche 22, la première branche 21 servant à la participation du refroidissement de l'habitacle du véhicule.

Tout comme pour le mode de refroidissement de l'habitacle du véhicule, le fluide réfrigérant circule dans la deuxième branche 22, est pré refroidi par le cinquième échangeur de chaleur 35, puis est détendu par le dispositif de détente 39 avant de traverser le troisième échangeur de chaleur 33 afin de récupérer les calories du liquide caloporteur.

Suite à cela, la deuxième fraction du fluide réfrigérant atteint le deuxième point de divergence 42. Selon le mode de chauffage de l'habitacle, il est possible que la récupération de calories se produisant au niveau du troisième échangeur de chaleur 33 ne soit pas suffisante pour évaporer efficacement le fluide réfrigérant dans son intégralité. Pour pallier cela, la valve trois voies 82 est paramétrée afin de laisser circuler une partie de la deuxième fraction de fluide réfrigérant jusqu'au bout de la deuxième branche 22 et donc jusqu'à l'accumulateur 4 afin de retenir le fluide réfrigérant sous forme liquide. La valve trois voies 82 peut par exemple être paramétrée pour faire circuler 10 à 20% de la deuxième fraction de fluide réfrigérant vers l'accumulateur 4.

Le reste de la deuxième fraction circule au sein de la branche de contournement 25. La circulation au sein de la branche de contournement 25 s'effectue jusqu'à rejoindre la branche principale 20, en amont du dispositif de compression 3, de manière identique au fluide réfrigérant circulant dans la branche de contournement 25 selon le mode de refroidissement de l'habitacle du véhicule, c'est-à-dire en circulant notamment dans la deuxième section 64 du cinquième échangeur de chaleur 35, ce qui a pour effet d'augmenter la température du fluide réfrigérant circulant dans la branche de contournement.

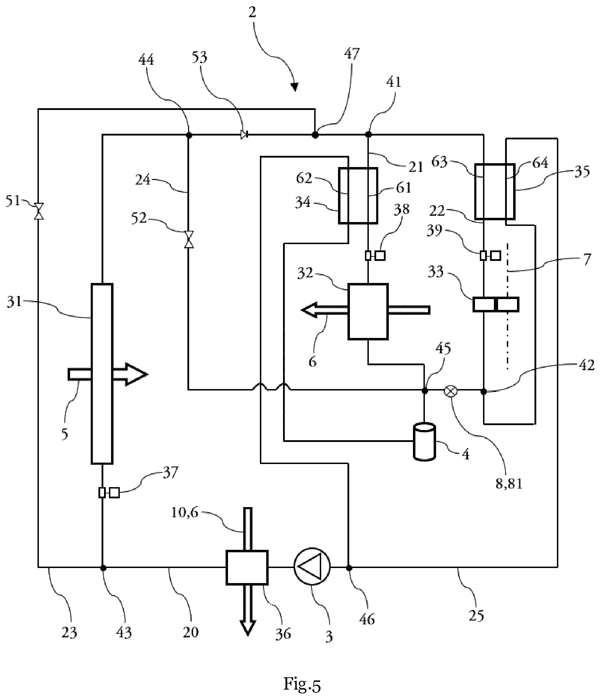

La figure 5 représente le deuxième mode de réalisation du circuit de fluide réfrigérant 2, comprenant un organe de contrôle 8 alternatif par rapport à la valve trois voies présentée sur les figures précédentes. Sur la figure 5, l'organe de contrôle 8 se présente sous la forme d'une valve à ouverture variable 81 disposée non pas sur le deuxième point de divergence 42 comme cela était illustré précédemment, mais sur la deuxième branche 22, en aval du deuxième point de divergence 42 et en amont du premier point de convergence 45. La valve à ouverture variable 81 peut par exemple être contrôlée à distance afin de déterminer un degré d'ouverture permettant une répartition du fluide réfrigérant souhaitée. Plus le degré d'ouverture de la valve à ouverture variable 81 est élevé, plus le fluide réfrigérant en sortie du troisième échangeur de chaleur 33 circule vers l'accumulateur 4. A l'inverse, plus le degré d'ouverture de la valve à ouverture variable 81 est faible, moins le fluide réfrigérant en sortie du troisième échangeur de chaleur 33 circule vers l'accumulateur 4, et donc plus le fluide réfrigérant en sortie du troisième échangeur de chaleur 33 circule au sein de la branche de contournement 25.

Sur la figure 5, la valve à ouverture variable 81 est disposée sur la deuxième branche 22, mais il est également possible de la positionner sur la branche de contournement 25, entre le deuxième point de divergence 42 et la deuxième section 64 du cinquième échangeur de chaleur 35. Dans cette configuration, plus le degré d'ouverture de la valve à ouverture variable 81 est faible, moins le fluide réfrigérant en sortie du troisième échangeur de chaleur 33 circule au sein de la branche de contournement 25, et donc plus le fluide réfrigérant en sortie du troisième échangeur de chaleur 33 circule vers l'accumulateur 4. L'organe de contrôle 8 peut donc être de nature diverse, l'essentiel étant qu'il soit possible de le contrôler à distance pour qu'il assure n'importe quelle répartition du fluide réfrigérant sortant du troisième échangeur de chaleur 33.

Le sixième échangeur de chaleur 36 diffère également des figures 2 à 4, notamment en ce qu'il est configuré pour opérer un échange de chaleur directement avec le flux d'air intérieur 6 et non de manière indirecte avec le liquide caloporteur tel que décrit précédemment. C'est alors le flux d'air intérieur 6 qui fait office de fluide caloporteur 10. Selon cette alternative, le sixième échangeur de chaleur 36 peut alors être agencé au sein de l'installation de ventilation, de chauffage et/ou de climatisation mentionnée précédemment, à l'instar du deuxième échangeur de chaleur 32.

Bien sûr, l'invention n'est pas limitée aux exemples qui viennent d'être décrits et de nombreux aménagements peuvent être apportés à ces exemples sans sortir du cadre de l'invention telle que définie dans les revendications.

L'invention, telle qu'elle vient d'être décrite, atteint bien le but qu'elle s'était fixée, et permet de proposer un circuit de fluide réfrigérant simplifié mais permettant néanmoins d'éviter toute perte de charge grâce à une branche de contournement de l'accumulateur.

## Revendications

1. Circuit de fluide réfrigérant (2) pour système de traitement thermique pour chauffer ou refroidir une enceinte ou un composant d'un véhicule, notamment un habitacle ou un composant d'une chaîne de traction de ce véhicule, comprenant une branche principale (20) débutant à un premier point de convergence (45) et se terminant à un premier point de divergence (41) et comprenant, dans un sens de circulation du fluide, au moins un accumulateur (4), un dispositif de compression (3) et au moins un premier échangeur de chaleur (31), le circuit de fluide réfrigérant (2) comprenant au moins une première branche (21) et une deuxième branche (22), toutes deux débutant au premier point de divergence (41) et se terminant au premier point de convergence (45), la première branche (21) comprenant au moins un deuxième échangeur de chaleur (32), la deuxième branche comprenant au moins un troisième échangeur de chaleur (33), le circuit comprenant un dispositif de détente (38) disposé en amont du deuxième échangeur de chaleur (32) et un dispositif de détente (39) disposé en amont du troisième échangeur de chaleur (33), **caractérisé en ce que** le circuit de fluide réfrigérant (2) comprend une branche de contournement (25) qui débute à un deuxième point de divergence (42) situé sur la deuxième branche (22), en aval du troisième échangeur de chaleur (33), et qui se termine à un deuxième point de convergence (46) situé sur la branche principale (20), en aval de l'accumulateur (4) et en amont du dispositif de compression (3), le circuit comprenant des moyens de contrôle (8) configurés pour gérer une circulation du fluide réfrigérant de la deuxième branche (22) vers l'accumulateur (4) et/ou vers la branche de contournement (25.

2. Circuit de fluide réfrigérant (2) selon la revendication 1, dans lequel le premier échangeur de chaleur (31) est configuré pour opérer un échange de chaleur entre le fluide réfrigérant circulant dans la branche principale (20) et un flux d'air extérieur (5) à un habitacle du véhicule.

3. Circuit de fluide réfrigérant (2) selon la revendication 1 ou 2, dans lequel le deuxième échangeur de chaleur (32) est configuré pour opérer un échange de chaleur entre le fluide réfrigérant circulant dans la première branche (21) et un flux d'air intérieur (6) destiné à être envoyé dans un habitacle du véhicule.

4. Circuit de fluide réfrigérant (2) selon l'une quelconque des revendications précédentes, dans lequel le troisième échangeur de chaleur (33) est configuré pour opérer un échange de chaleur entre le fluide réfrigérant circulant dans la deuxième branche (22) et un circuit de liquide caloporteur (7).

5. Circuit de fluide réfrigérant selon l'une quelconque des revendications précédentes, comprenant un organe de détente (37) disposé en amont du premier échangeur de chaleur (31).

6. Circuit de fluide réfrigérant (2) selon l'une quelconque des revendications précédentes, comprenant un quatrième échangeur de chaleur (34) qui comprend une première section (61) disposée sur la première branche (21) en amont de l'élément de détente (38) et une deuxième section (62) disposée sur la branche principale (20) en aval de l'accumulateur (4) et en amont du deuxième point de convergence (46), le quatrième échangeur de chaleur (34) étant configuré pour opérer un échange de chaleur entre le fluide réfrigérant circulant dans la première branche (21) et le fluide réfrigérant circulant dans la branche principale (20), la branche de contournement (25) étant configurée pour faire circuler le fluide réfrigérant afin que ce dernier contourne le quatrième échangeur de chaleur (34) et l'accumulateur (4).

7. Circuit de fluide réfrigérant (2) selon l'une quelconque des revendications précédentes, dans lequel les moyens de contrôle (8) est une valve à ouverture variable (81) disposée sur la deuxième branche (22), en aval du deuxième point de divergence (42) et en amont du premier point de convergence (45), ou sur la branche de contournement (25), en aval du deuxième point de divergence (42) et en amont du deuxième point de convergence (46).

8. Circuit de fluide réfrigérant (2) selon l'une quelconque des revendications 1 à 6, dans lequel les moyens de contrôle (8) sont une valve trois voies (82) disposée sur le deuxième point de divergence (42).

9. Procédé de contrôle d'un circuit de fluide réfrigérant (2) selon l'une quelconque des précédentes, au cours duquel :
- dans un mode de refroidissement d'un habitacle du véhicule, on ajuste les moyens de contrôle (8) afin que le fluide réfrigérant provenant du troisième échangeur de chaleur (33) circule intégralement dans la branche de contournement (25),
- dans un mode de chauffage de l'habitacle du véhicule, on ajuste les moyens de contrôle (8) afin de déterminer une proportion de fluide réfrigérant circulant vers l'accumulateur (4) et/ou circulant dans la branche de contournement (25).

10. Procédé de contrôle selon la revendication précédente, au cours duquel, dans le mode de chauffage de l'habitacle du véhicule, le fluide réfrigérant récupère des calories en traversant le troisième échangeur de chaleur (33).

## Patentansprüche

1. Kältemittelkreislauf (2) für ein Wärmebehandlungssystem zum Erwärmen oder Kühlen eines Gehäuses oder einer Komponente eines Fahrzeugs, insbesondere eines Fahrgastraums oder einer Komponente eines Antriebsstrangs dieses Fahrzeugs, umfassend einen Hauptzweig (20), der an einem ersten Konvergenzpunkt (45) beginnt und an einem ersten Divergenzpunkt (41) endet und in einer Strömungsrichtung des Fluids mindestens einen Akkumulator (4), eine Kompressionsvorrichtung (3) und mindestens einen ersten Wärmetauscher (31) umfasst, wobei der Kältemittelkreislauf (2) mindestens einen ersten Zweig (21) und einen zweiten Zweig (22) umfasst, die beide am ersten Divergenzpunkt (41) beginnen und am ersten Konvergenzpunkt (45) enden, wobei der erste Zweig (21) mindestens einen zweiten Wärmetauscher (32) umfasst, der zweite Zweig mindestens einen dritten Wärmetauscher (33) umfasst, wobei der Kreislauf eine Entspannungsvorrichtung (38) umfasst, die dem zweiten Wärmetauscher (32) vorgelagert ist, und eine Entspannungsvorrichtung (39), die dem dritten Wärmetauscher (33) vorgelagert ist, **dadurch gekennzeichnet, dass** der Kältemittelkreislauf (2) einen Umgehungszweig (25) umfasst, der an einem zweiten Divergenzpunkt (42) beginnt, der sich auf dem zweiten Zweig (22) stromabwärts des dritten Wärmetauschers (33) befindet, und der an einem zweiten Konvergenzpunkt (46) endet, der sich auf dem Hauptzweig (20) stromabwärts des Akkumulators (4) und stromaufwärts der Kompressionsvorrichtung (3) befindet, wobei der Kreislauf Steuerungsmittel (8) umfasst, die konfiguriert sind, um eine Zirkulation des Kältemittels vom zweiten Zweig (22) zum Akkumulator (4) und/oder zum Umgehungszweig (25) zu steuern.

2. Kältemittelkreislauf (2) nach Anspruch 1, wobei der erste Wärmetauscher (31) konfiguriert ist, um einen Wärmeaustausch zwischen dem im Hauptzweig (20) zirkulierenden Kältemittel und einem Außenluftstrom (5) zu einem Fahrgastraum des Fahrzeugs durchzuführen.

3. Kältemittelkreislauf (2) nach Anspruch 1 oder 2, wobei der zweite Wärmetauscher (32) konfiguriert ist, um einen Wärmeaustausch zwischen dem im ersten Zweig (21) zirkulierenden Kältemittel und einem Innenluftstrom (6), der in einen Fahrgastraum des Fahrzeugs geleitet werden soll, durchzuführen.

4. Kältemittelkreislauf (2) nach einem der vorhergehenden Ansprüche, wobei der dritte Wärmetauscher (33) konfiguriert ist, um einen Wärmeaustausch zwischen dem im zweiten Zweig (22) zirkulierenden Kältemittel und einem Wärmeträgerflüssigkeitskreislauf (7) durchzuführen.

5. Kältemittelkreislauf nach einem der vorhergehenden Ansprüche, umfassend ein Entspannungsorgan (37), das dem ersten Wärmetauscher (31) vorgelagert ist.

6. Kältemittelkreislauf (2) nach einem der vorhergehenden Ansprüche, umfassend einen vierten Wärmetauscher (34), der einen ersten Abschnitt (61) umfasst, der auf dem ersten Zweig (21) stromaufwärts des Entspannungselements (38) angeordnet ist, und einen zweiten Abschnitt (62), der auf dem Hauptzweig (20) stromabwärts des Akkumulators (4) und stromaufwärts des zweiten Konvergenzpunkts (46) angeordnet ist, wobei der vierte Wärmetauscher (34) konfiguriert ist, um einen Wärmeaustausch zwischen dem im ersten Zweig (21) zirkulierenden Kältemittel und dem im Hauptzweig (20) zirkulierenden Kältemittel durchzuführen, wobei der Umgehungszweig (25) konfiguriert ist, um das Kältemittel zirkulieren zu lassen, damit dieses den vierten Wärmetauscher (34) und den Akkumulator (4) umgeht.

7. Kältemittelkreislauf (2) nach einem der vorhergehenden Ansprüche, wobei die Steuerungsmittel (8) ein Ventil mit variabler Öffnung (81) sind, das auf dem zweiten Zweig (22) stromabwärts des zweiten Divergenzpunkts (42) und stromaufwärts des ersten Konvergenzpunkts (45) oder auf dem Umgehungszweig (25) stromabwärts des zweiten Divergenzpunkts (42) und stromaufwärts des zweiten Konvergenzpunkts (46) angeordnet ist.

8. Kältemittelkreislauf (2) nach einem der Ansprüche 1 bis 6, wobei die Steuerungsmittel (8) ein Dreiwegeventil (82) sind, das am zweiten Divergenzpunkt (42) angeordnet ist.

9. Verfahren zur Steuerung eines Kältemittelkreislaufs (2) nach einem der vorhergehenden Ansprüche, bei dem:
- in einem Kühlmodus eines Fahrgastraums des Fahrzeugs die Steuerungsmittel (8) so eingestellt werden, dass das vom dritten Wärmetauscher (33) kommende Kältemittel vollständig im Umgehungszweig (25) zirkuliert,
- in einem Heizmodus des Fahrgastraums des Fahrzeugs die Steuerungsmittel (8) so eingestellt werden, dass ein Anteil des zum Akkumulator (4) zirkulierenden Kältemittels und/oder des im Umgehungszweig (25) zirkulierenden Kältemittels bestimmt wird.

10. Steuerungsverfahren nach dem vorhergehenden Anspruch, bei dem im Heizmodus des Fahrgastraums des Fahrzeugs das Kältemittel beim Durchlaufen des dritten Wärmetauschers (33) Kalorien aufnimmt.

## Claims

1. Refrigerant fluid circuit (2) for thermal treatment system for heating or cooling an enclosure or a component of a vehicle, particularly a cabin or a component of a powertrain of this vehicle, comprising a main branch (20) starting at a first convergence point (45) and ending at a first divergence point (41) and comprising, in a fluid circulation direction, at least one accumulator (4), a compression device (3) and at least one first heat exchanger (31), the refrigerant fluid circuit (2) comprising at least a first branch (21) and a second branch (22), both starting at the first divergence point (41) and ending at the first convergence point (45), the first branch (21) comprising at least one second heat exchanger (32), the second branch comprising at least one third heat exchanger (33), the circuit comprising an expansion device (38) arranged upstream of the second heat exchanger (32) and an expansion device (39) arranged upstream of the third heat exchanger (33), **characterized in that** the refrigerant fluid circuit (2) comprises a bypass branch (25) which starts at a second divergence point (42) located on the second branch (22), downstream of the third heat exchanger (33), and which ends at a second convergence point (46) located on the main branch (20), downstream of the accumulator (4) and upstream of the compression device (3), the circuit comprising control means (8) configured to manage a circulation of the refrigerant fluid from the second branch (22) to the accumulator (4) and/or to the bypass branch (25).

2. Refrigerant fluid circuit (2) according to claim 1, wherein the first heat exchanger (31) is configured to operate a heat exchange between the refrigerant fluid circulating in the main branch (20) and an external air flow (5) to a cabin of the vehicle.

3. Refrigerant fluid circuit (2) according to claim 1 or 2, wherein the second heat exchanger (32) is configured to operate a heat exchange between the refrigerant fluid circulating in the first branch (21) and an internal air flow (6) intended to be sent into a cabin of the vehicle.

4. Refrigerant fluid circuit (2) according to any one of the preceding claims, wherein the third heat exchanger (33) is configured to operate a heat exchange between the refrigerant fluid circulating in the second branch (22) and a heat transfer fluid circuit (7).

5. Refrigerant fluid circuit according to any one of the preceding claims, comprising an expansion device (37) arranged upstream of the first heat exchanger (31).

6. Refrigerant fluid circuit (2) according to any one of the preceding claims, comprising a fourth heat exchanger (34) which comprises a first section (61) arranged on the first branch (21) upstream of the expansion element (38) and a second section (62) arranged on the main branch (20) downstream of the accumulator (4) and upstream of the second convergence point (46), the fourth heat exchanger (34) being configured to operate a heat exchange between the refrigerant fluid circulating in the first branch (21) and the refrigerant fluid circulating in the main branch (20), the bypass branch (25) being configured to circulate the refrigerant fluid so that the latter bypasses the fourth heat exchanger (34) and the accumulator (4).

7. Refrigerant fluid circuit (2) according to any one of the preceding claims, wherein the control means (8) is a variable opening valve (81) arranged on the second branch (22), downstream of the second divergence point (42) and upstream of the first convergence point (45), or on the bypass branch (25), downstream of the second divergence point (42) and upstream of the second convergence point (46).

8. Refrigerant fluid circuit (2) according to any one of claims 1 to 6, wherein the control means (8) are a three-way valve (82) arranged on the second divergence point (42).

9. Method for controlling a refrigerant fluid circuit (2) according to any one of the preceding claims, during which:
- in a cooling mode of a cabin of the vehicle, the control means (8) are adjusted so that the refrigerant fluid coming from the third heat exchanger (33) circulates entirely in the bypass branch (25),
- in a heating mode of the cabin of the vehicle, the control means (8) are adjusted to determine a proportion of refrigerant fluid circulating towards the accumulator (4) and/or circulating in the bypass branch (25).

10. Control method according to the preceding claim, during which, in the heating mode of the cabin of the vehicle, the refrigerant fluid recovers calories while passing through the third heat exchanger (33).
